# EUROPEAN PATENT APPLICATION

(11) **EP 1 375 202 A2**
(43) Date of publication of application: **02.01.2004**
(21) Application number: 03012014.1
(22) Date of filing: 28.05.2003
(51) Int. Cl.: B60G 3/00, B60G 9/00, B60G 7/00

(54) **Rocking support device for wheel hubs**

(30) Priority: 26.06.2002 IT TO20020553
(71) Applicant: C.R.F. Società Consortile per Azioni, 10043 Orbassano (Torino) (IT)
(72) Inventor: Asteggiano, Valter, 12060 Pocapaglia (CN) (IT)
(74) Representative: Di Francesco, Gianni

(57) **Abstract**

A support device for motor-vehicle wheel hubs adapted to be mounted between the hub and the body of the rear suspension, consisting of a connection element (12), rotatably connected to the body of the suspension and adapted to rotate on a plane which is basically perpendicular to the ground and parallel to the longer axis of the motor-vehicle, provided with attachments (15) for the hub (16) and connected to an elastic element (20), articulated on the body of the suspension (2, 3) and adapted to control its rotation.

## Description

### DESCRIPTION OF THE INVENTION

The present invention refers to a rocking support device for wheel hubs, that is a mechanical device that can be applied to many types of motor-vehicle rear suspensions in order to improve comfort for passengers. Said rocking support device is intended to take up easily and economically the longitudinal impacts on the wheel of the motor-vehicle which are due to the impact of the wheel itself against upward projecting bumps of the road. The taking up takes place without causing the wheels to steer thus avoiding the consequent negative effect on the stability of the motor-vehicle.

Suspensions of motor-vehicles are now required to provide higher and higher performances in terms both of stability and comfort. In can be stated, in fact, that generally speaking current suspensions are characterised by continually increasing levels of longitudinal flexibility of the wheel in order to improve the taking up of the longitudinal impacts. This trend has affected the design of the suspension determining, on the one hand and as far as traditional schemes are concerned, more attention being paid to the possibility of controlling the steering of the wheel when moving longitudinally, by means of an increase in the geometrical constraints for the areas of attachment of the arms and, on the other end, the definition of new types of suspensions adapted to control handling and comfort separately. These suspensions are however very expensive.

Some kinds of suspensions however, such as those which have rocking arms/axles, where the two wheels are interconnected between them, do not allow at all to control handling and comfort separately. More flexible bushes have been introduced for attachment to the bodywork in order to improve comfort, yet this implies a series of negative effects: a) divergence in case of side loads; b)divergence in case of asymmetrical longitudinal braking loads; c) divergence in case of asymmetrical longitudinal loads at the centre of the wheel.

It is an object of the present invention to provide a device that allows some freedom in the movements between the elements of the wheel hub and the body of the suspension, thus allowing mutual longitudinal displacement between the two parts in order make the wheel suffering the impact not to steer.

Said object is achieved by means of the present invention which provides a rocking support device for the wheel hub presenting the characteristics set forth in claim 1.

Additional characteristics and advantages will become more clear from the following description referring to the appended drawings, provided as non-restrictive example, and in which:
figure 1 is a schematic perspective view of an embodiment of the device according to the invention, applied to a rear suspension of the kind with torsion bridge;
figure 2 is a schematic view of the device of the invention applied to a rear suspension of the type with a spring and coaxial dampers (rocking arm);
figure 3 is a schematic view of the device of the invention applied on a rear suspension of the type with leaf spring and rigid transverse axle;
figure 4 is a perspective view of a preferred embodiment of the device of the invention shown in figure 1;
figure 5 is a perspective view of another preferred embodiment of the device of the invention applied to a rear suspension of the kind with torsion bridge and
figure 6 is a perspective view of an additional preferred embodiment of the device of the invention applied to a rear suspension of the kind with torsion bridge.

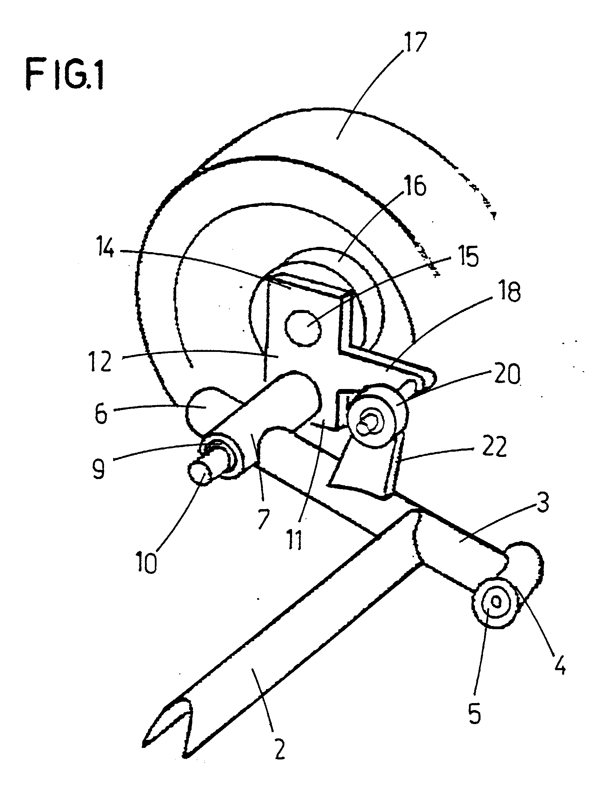

With reference to the figures, and in particular to figure 1, reference number 2 indicates the torsion bridge of a rear suspension for motor-vehicles, one of the longitudinal arms of which is indicated by reference number 3. One of the ends 4 of said arm is connected to the bodywork of the motor-vehicle by means of a bushing 5. The other end 6 of the arm 3 is provided with a cylindrical seat 7 which is transversal to it and basically perpendicular to the longer axis of the motor-vehicle, where there is a pair of bearings 9 adapted to rotatably support a pivot 10 there located or otherwise connected to them.

According to the invention, the pivot 10 is integral with a first end 11 of a metal plate 12 the shape of which is basically triangular. The second end 14 of the plate 12, which, when in use, looks upwards in relationship to the arm 3 of the suspension, is provided with the attachments 15 by means of a hub of the wheel 17, looking towards the external part of the motor-vehicle. The third end 18 of the metal plate 12 presents a bush 20, of predefined elasticity, which is integral with a support 22 fixed on the arm 3 of the suspension.

According to the invention, the support device, when in use, will be able to rock forwards and backwards, depending on the direction the motor-vehicle is moving, around the axis determined by the pivot 10 inserted into the bearings 9. This rocking, that allows to prevent the wheel from steering, will take place under control of the elastic characteristic of the bush 20 placed between the rocking lever and the structure of the suspension.

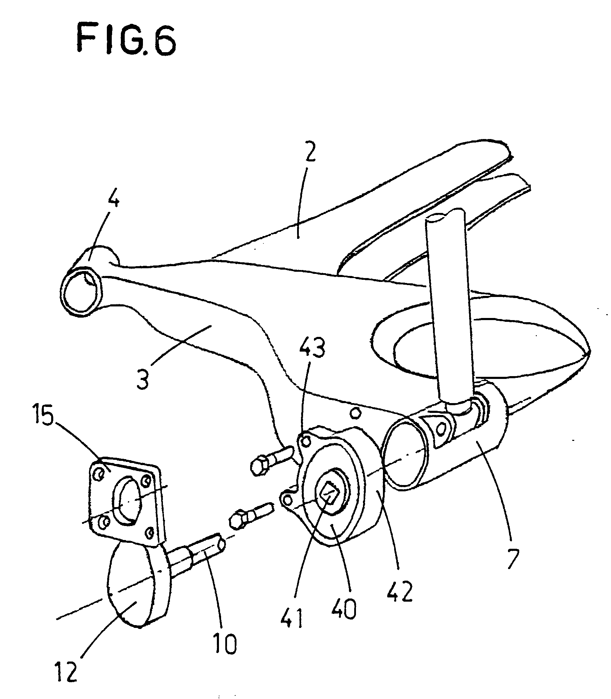

Said bush can be of the SILENTBLOC type if it is coaxial to the pivot 10 (see figure 1) and of the torsional type if it is inserted directly on the axle of the bearing pivot (embodiment shown in figure 6).

A rocking device of this type, allows the suspension to comply with its function of taking up longitudinal loads caused by the impact of the wheel with an obstacle.

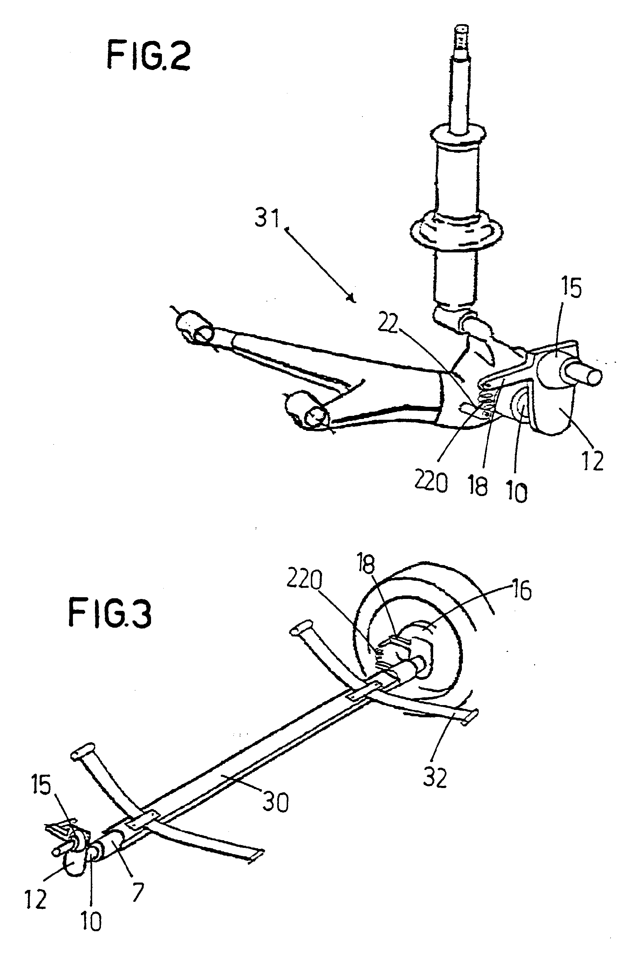

In this way conventional suspension bushing lose their original function of controlling the longitudinal flexibility of the axle, and reach a very high radial rigidity in order to nullify their effect as to the divergence of the wheel and allowing their to control specifically the stability of the motor-vehicle. The device according to the invention allows to provide passengers with more comfort in case the overall contained weight increases. Besides, it can be mounted on different known types of suspensions, as shown in figure 2 and 3, where same parts are indicated by the same reference numbers. Figure 2 shows the device of the invention mounted on a rocking arm suspension. In the drawing the elastic element consisting of the bushing 20 of figure 1, has been replaced by a spring 220 with the same function. Yet it is possible to replace the spring with another elastic damping element, for instance an hydraulic bushing or a different device, without going beyond the scope of the appended claims.

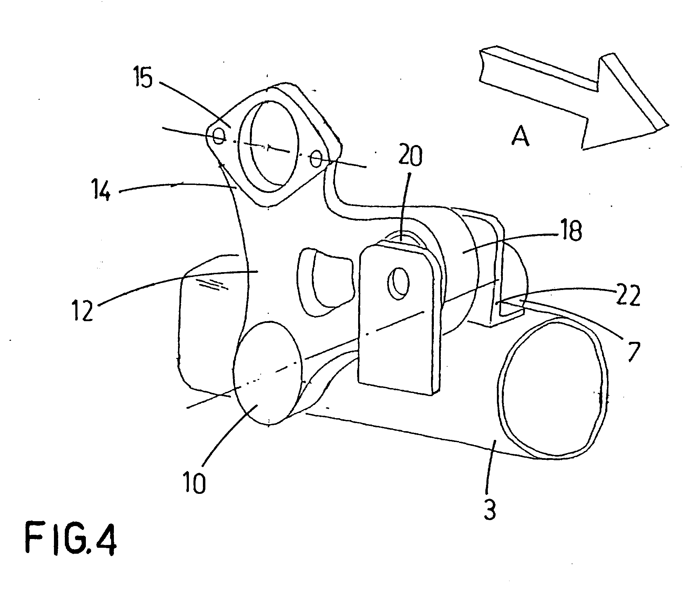

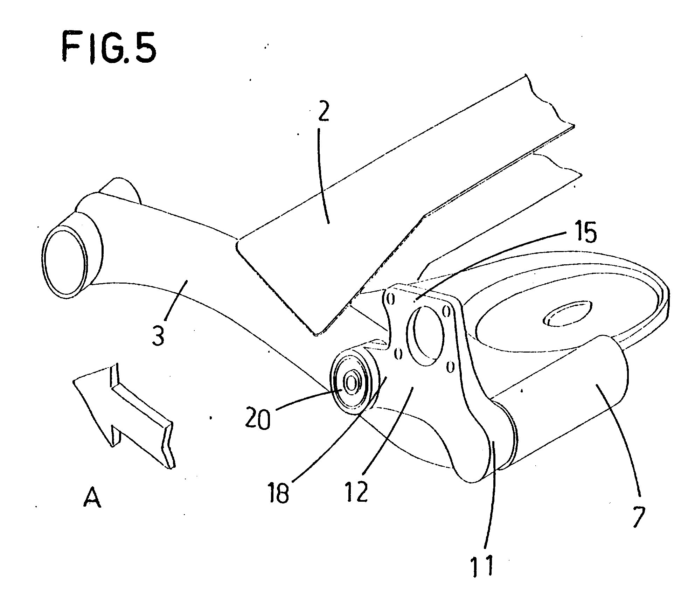

Figure 3 shows the device mounted on a rear suspension with rigid axles 30 and leaf springs 32, of the type used for commercial motor-vehicles, economical motor-vehicles and multipurpose vehicles. The device is basically mounted as in the previous case, but there might be different solutions to connect the device to the suspension, without going beyond the scope of the invention. Figure 4 and 5 show two different embodiments of the device according to the invention, both embodiments being provided with the same components which are connected to the suspension in different ways.

The embodiment shown in figure 6 is different since a twisting bushing 40 is used, the bushing being mounted coaxially to the pivot 10. The pivot present in fact a squared section that becomes engaged with a hole 41 the section of which is also squared, the hole being basically equivalent to the part of the pivot and axial to the internal framework of the bushing 40. On the external part of the framework of the bushing 40 there are clamps 43 adapted to prevent it from rotating together with the pivot 10. It is clear from figure 6 that in this embodiment the shape of the plate 12 will not be triangular since there is not the support end of the bushing which is now coaxial to the pivot 10. The shape of this plate is basically circular, the attachments for the hub (16) being located at an upper position. Anyway, with the exception of the bushing working under torsion, the device works basically in the same way as the devices previously illustrated.

## Claims

1. Support device for the wheel hub of a motor vehicle adapted to be mounted between the hub and the body of the rear suspension, **characterised in that** it consists of a connection element (12), rotatably connected to the body of the suspension and adapted to rotate on a plane which is basically perpendicular to the ground and parallel to the longer axis of the motor-vehicle, provided with attachments (15) for the hub (16) and connected to an elastic element (20), articulated on the body of the suspension (2, 3) and adapted to control the rotation.

2. Support device for a wheel hub as claimed in claim 1, **characterised in that** the connection element (12) is a plate element (12) the shape of which is basically triangular, and a first end of which (11) is provided with a pivot (10) adapted to rotatably connect it to the body of the suspension (2, 3).

3. Support device for a wheel hub as claimed in claim 2, **characterised in that** a second end (14) of the connection element (12) is provided with attachments (15) for the wheel hub (16).

4. Support device for a wheel hub as claimed in claim 2, **characterised in that** the third end (18) is connected to a bushing (20) of predefined elasticity which, in turn, is articulated on the body of the suspension (2, 3).

5. Device as claimed in claim 2, **characterised in that** the pivot (10) of the connection element (12) rotates on bearings housed into a seat made in the body of the suspension (2, 3).

6. Device as claimed in claim 2, **characterised in that** the pivot (10) of the connection element (12) rotates on joint pivots which are fixed directly on the body of the suspension.

7. Device as claimed in claim 1 and 2, **characterised in that** the elastic element (20) is a oil/gas damper.

8. Device as claimed in claim 1 and 2, **characterised in that** the elastic element (20) is a spring of predefined rigidity.

9. Device as claimed in claim 2, **characterised in that** the end (14) supporting the wheel hub looks upwards in relationship to the body of the suspension.

10. Device as claimed in claim 2, **characterised in that** the third end (18) connected to the elastic element (20) looks towards the front part of the motor-vehicle.

11. Device as claimed in claim 2, **characterised in that** the end with the attachments for the wheel hub (16) looks upwards in relationship to the body of the suspension.

12. Device as claimed in claim 1, **characterised in that** the shape of the connection element (12) is basically circular, said pivot (10) being fixed coaxially and said attachments (15) for the wheel hub (16) being fixed at an upper position.

13. Device as claimed in claim 10, **characterised in that** the elastic element consists of a torsion bushing (40) of predefined rigidity, the internal framework of which is rotatably fixed coaxially to the pivot (10) and the external framework of which (42) is connected to the body of the suspension (2, 3).
